Europäisches Patentamt

European Patent Office

Office européen des brevets

(11) Veröffentlichungsnummer: **0 288 658 B1**

## (12) EUROPÄISCHE PATENTSCHRIFT

(45) Veröffentlichungstag der Patentschrift: **11.09.91**

(21) Anmeldenummer: **88100659.7**

(22) Anmeldetag: **19.01.88**

(51) Int. Cl.⁵: **B60H 1/32**, F25B 49/00, G05D 23/20

(54) Verfahren zur Steuerung einer Kraftfahrzeugklimaanlage und Kraftfahrzeugklimaanlage zur Durchführung des Verfahrens.

(30) Priorität: 26.02.87 DE 3706152

(43) Veröffentlichungstag der Anmeldung:
**02.11.88 Patentblatt 88/44**

(45) Bekanntmachung des Hinweises auf die
Patenterteilung:
**11.09.91 Patentblatt 91/37**

(84) Benannte Vertragsstaaten:
**DE ES FR GB IT SE**

(56) Entgegenhaltungen:
EP-A- 0 087 770      EP-A- 0 156 078
DE-A- 3 333 012      DE-A- 3 510 776
US-A- 4 325 223      US-A- 4 473 109
US-A- 4 570 450      US-A- 4 582 124

PATENT ABSTRACTS OF JAPAN, Band 8, Nr.
143 (M-306)[1580], 4. Juli 1984; & JP - A - 59
40930 (NISSAN) 06.03.1984

PATENT ABSTRACTS OF JAPAN, Band 9, Nr.
7 (M-350)[1730], 12. Januar 1985; & JP - A - 59
156 817 (HINO JIDOSHA) 06.08.1984

(73) Patentinhaber: **Behr GmbH & Co.**
**Mauserstrasse 3**
**W-7000 Stuttgart 30(DE)**

(72) Erfinder: **Die Erfinder haben auf ihre Nen-**
**nung verzichtet**

(74) Vertreter: **Riedel, Peter, Dipl.-Ing.**
**Behr GmbH & Co. Mauserstrasse 3**
**W-7000 Stuttgart 30(DE)**

EP 0 288 658 B1

**Beschreibung**

Die Erfindung bezieht sich auf ein Verfahren zur Steuerung einer Kraftfahrzeugklimaanlage gemäß dem Oberbegriff des Patentanspruchs 1 sowie auf eine Kraftfahrzeugklimaanlage zur Durchführung dieses Verfahrens.

In der US-A-4,325,233 ist eine stationäre Kälteanlage für Kühlhäuser mit großem Fassungsvolumen beschrieben. Diese Anlage umfaßt einen leistungsgeregelten Kältemittelverdichter, einen Kältemittelkondensator, einen Verdampfer und eine stromauf des Verdampfers angeordnete Drosseleinrichtung für das Kältemittel. Dem Kondensator ist ein Lüfter zur Kühlluftbeaufschlagung zugeordnet und zur Erzeugung eines Luftstromes durch den Verdampfer ist ebenfalls ein Gebläse vorgesehen. Über entsprechende Temperaturfühler werden die Kondensatorleistung und die Verdampferleistung erfaßt und als elektrische Größen einer elektronischen Steuerschaltung zugeführt. In der elektronischen Steuerschaltung werden Ausgangssignale erzeugt, die das Saugvolumen des Kompressors sowie die Lüfterdrehzahlen der dem Kondensator und dem Verdampfer zugeordneten Gebläse regeln.

Bei der bekannten Kälteanlage ist jedoch der Betrieb keinen extremen Schwankungen unterworfen, wie dies beispielsweise im Kraftfahrzeug aufgrund der extremen Temperaturunterschiede sowie der sich ständig ändernden Drehzahl des Antriebsmotors und weiterer Einflüsse der Fall ist.

Bei einer aus der EP-B-0 038 188 bekannten Kraftfahrzeugklimaanlage bestehen neben dem eigentlichen Regelsystem für die Kraftfahrzeugklimaanlage weitere getrennte Steuer- bzw. Regelsysteme für einzelne Komponenten im Kraftfahrzeug, die ebenfalls die Innenraumtemperatur im Fahrzeug beeinflussen können, von der eigentlichen Klimaregelung aber völlig unabhängig sind. Hierzu gehören in erster Linie die Schutzschaltung zur Verhütung der Verdampfervereisung, die ein Abschalten des Kompressors bewirkt, die Hochdruck- bzw. Heißgastemperaturschutzschaltung die ebenfalls auf den Kompressorantrieb bzw. eine entsprechende Kupplung einwirkt, sowie die Kühlwassertemperaturregelung, die ein Zu- bzw. Abschalten des Kühlerlüfters bewirkt. Jeder dieser Eingriffe, die unabhängig von der eigentlichen Klimaregelung für den Fahrzeuginnenraum erfolgen, beeinflussen die Leistung der Kälteanlage und somit die Lufttemperatur, die über die Klimaanlage dem Fahrzeuginnenraum zugeführt wird, und damit letztendlich auch das Temperaturniveau im Fahrgastraum.

Außerdem unterliegen Kältekreisläufe in Fahrzeugen stets wechselnden Randbedingungen, wie beispielsweise Antriebsdrehzahl, Kühlbedingungen am Kondensator, luft- und kältemittelseitige Beauf-schlagung des Verdampfers, Beschleunigungskräfte und Kälteleistungsbedarf. Bei getrennten Steuer- bzw. Regelsystemen führt dies dazu, daß die Kompensation einer Störgröße in einen Regelkreis als Störgrößen eines oder mehreren der übrigen Regelsysteme wirkt, was nicht nur zu einer äußerst hohen Schalthäufigkeit und extremer Bauteilebelastung, sondern auch zu einem schlechten Wirkungsgrad führt.

Es ist daher die Aufgabe der Erfindung, ein Verfahren zur Steuerung einer Kraftfahrzeugklimaanlage der im Oberbegriff des Patentanspruchs 1 genannten Art zu entwickeln, durch das die Kälteleistung der Anlage optimiert und die jeweilige Funktion der die Betriebsweise der Klimaanlage beeinflussenden Aggregate in die Regelcharakteristik einbezogen wird. Es ist ferner Aufgabe der Erfindung, eine Kraftfahrzeugklimaanlage zur Durchführung des Verfahrens zu schaffen.

Diese Aufgabe wird bei einem Verfahren zur Steuerung einer Kraftfahrzeugklimaanlage der genannten Art dadurch gelöst, daß die Kompressorleistung unter Einbeziehung der Kompressordrehzahl erfaßt und mit den anderen Eingangssignalen der genannten Leistungen verknüpft und in Abhängigkeit von mindesten zweien dieser Leistungswerte und der Einbeziehung der Parameter für den Kälteleistungsbedarf, die Verdampfervereisung, die Verdichtungsendtemperatur und den Flüssigkeitsschlag die genannten Ausgangssignale erzeugen, wobei als Maß für die Verdichtungsendtemperatur die Temperatur des Kältemittels auf der Hochdruckseite des Kompressors dient und zur Bestimmung der Gefahr eines Flüssigkeitsschlags sowohl der Druck als auch die Temperatur auf der Saugseite des Kompressors gemessen und diesen Werten entsprechende elektrische Signale der Steuerschaltung zugeführt werden.

Die wesentlichen Vorteile der Erfindung sind insbesondere in der optimalen Prozessführung der Gesamtanlage und dem besonders guten Klimatisierungskomfort des Fahrzeuginnenraums zu sehen. Durch die optimale Prozessführung wird der Wirkungsgrad der Einzelkomponenten verbessert, außerdem werden kritische Betriebszustände vermieden und die Schaltfrequenz des Kompressorantriebs wird wesentlich verringert. Die oft als unangenehm empfundenen Einschaltstöße des Kompressors sowie Temperaturschwankungen der in die Fahrgastzelle zugeführten Luft werden vermieden. Zur Vermeidung von Schäden am Verdichter ist insbesondere der Gefahr des sogenannten Flüssigkeitsschlags wirksam zu begegnen, in dem sowohl der Druck als auch die Temperatur auf der Saugseite des Kompressors gemessen und diesen Werten entsprechende elektrische Signale der Steuerschaltung zugeführt werden.

Zur weiteren Optimierung bezüglich des Leistungsbedarfs, der Verringerung der Schalthäufigkeit, der Kupplung und der Vermeidung von Einschaltstößen können wahlweise noch folgende Maßnahmen getroffen werden:

- zur Beeinflussung der Kompressorleistung wird das geometrische Fördervolumen durch eine direkte Hubveränderung oder durch Steuerung des Schließzeitpunkts des Verdichtungsraumes verändert,
- die Drehzahl des Kompressors wird gesteuert,
- der Füllungsgrad des Kompressors wird durch eine veränderliche Ausgangsdrosselung gesteuert.

Gemäß einer bevorzugten Weiterbildung des Erfindungsgegenstandes wird zur Beeinflussung der Kondensatorleitung der Luftdurchsatz durch den Kondensator gesteuert, und zwar durch Steuerung der Drehzahl des Lüfters oder mittels einer von einem Stellmotor betätigten Jalousie. Durch diese Maßnahme wird ein optimales Zusammenwirken des Kondensators mit dessen Umfeld, insbesondere dem Wasserkühler für das Motorkühlwasser, erreicht.

Zur Verbesserung des Klimatisierungskomforts ist es vorteilhaft, daß zur Beeinflussung der Verdampferleistung auch der Luftdurchsatz durch den Verdampfer infolge der Drehzahlregelung des Gebläses gesteuert wird. Für die Drehzahlregelung des Kondensatorlüfters gibt es mehrere Möglichkeiten, wobei jedoch Kupplungen oder Antriebe bevorzugt sind. mit denen eine stufenlose Regelbarkeit gegeben ist. Eine technisch einfache und verlustleistungsarme, stufenlose Regelung ergibt sich bei quasi-stetiger Ansteuerung der Antriebe, also bei Ansteuerung mit einem z.B. impulspausenmodulierten Rechtecksignal, das in Verbindung mit der Trägheit der Antriebe bzw. der Regelstrecke zu einem quasi-stetigen Regelergebnis führt. Damit die unvermeidlichen Schaltverluste in der Steuerschaltung und in den Antrieben möglichst gering bleiben und damit die elektrische und die funktechnische Entstörung mit geringem Aufwand möglich wird, wird vorgeschlagen, daß zur Regelung des Lüftermotors oder des Gebläsemotors die Regelcharakteristik quasi-stetig ist, wobei die Taktfrequenz des Signals < 1.000 Hz, vorzugsweise < 100 Hz ist.

Bei vorhandenen leistungsfähigen Druckstörungen und/oder geringem verfügbaren Bauraum für den Lüfterantrieb, ist es von Vorteil, daß der Lüfter hydrostatisch angetrieben wird und zur Steuerung der Lüfterdrehzahl die elektrische Steuerschaltung stetige oder quasi-stetige Ausgangssignale einem elektromechanischen Stellglied zuführt, das auf ein Regelventil des hydrostatischen Antriebssystems wirkt.

Gemäß einer bevorzugten Weiterbildung des erfindungsgemäßen Verfahrens werden die Temperatur oder der Druck des Kältemittels am Ausgang des Verdampfers und/oder die Oberflächentemperatur im Verdampfernetz und/oder die Luftaustrittstemperatur stromab des Verdampfers gemessen, gegebenenfalls in elektrische Signale umgewandelt und der elektronischen Steuerschaltung zugeführt. Aus diesen Werten wird das Maß für die Verdampfervereisung ermittelt. Der Vorteil dieser Maßnahme liegt darin, daß stets eine maximale Ausnutzung des Verdampfers möglich ist.

Darüber hinaus ist es von Vorteil, daß die Drehzahl des Antriebsmotors des Fahrzeugs mittels einer Sensoreinrichtung erfaßt und der elektronischen Steuerschaltung zugeführt wird und die Steuerschaltung das Überschreiten einer vorgegebenen Drehzahl feststellt. Damit werzeitlich aufeinander folgenden Werten der Motordrehzahl die Größe der Beschleunigung. Durch die Bildung der ersten Ableitung der Motordrehzahl ist ein frühes Erkennen des Drehzalverlaufs und ein frühzeitiges Eingreifen in den Regelkreis möglich.

Zweckmäßigerweise wird mittels eines Sensors die Stellung und/oder Bewegung des Fahrpedals erfaßt und ein entsprechendes Signal der Steuerschaltung zugeführt. Dadurch ist es möglich, den Kompressor und gegebenenfalls auch die Gebläse- und Lüfterantriebe in Phasen starker Beschleunigung des Antriebsmotors temporär abzuschalten, damit beispielsweise für Überholvorgänge eine möglichst große Leistung an den Antriebsrädern des Fahrzeugs zur Verfügung steht.

Eine Kraftfahrzeugklimaanlage der gattungsgemäßen Art umfaßt einen Kältekreislauf mit zumindest einem leistungsgeregelten Kältemittelverdichter, einem Kondensator, einem Verdampfer und einer stromauf des Verdampfers angeordneten Drosseleinrichtung für das Kältemittel, wobei dem Kondensator ein Lüfter zur Kühlluftbeaufschlagung zugeordnet und zur Erzeugung eines Luftstromes durch den Verdampfer ein Gebläse vorgesehen ist.

Die Aufgabe, eine Kraftfahrzeugklimaanlage zur Durchführung des Verfahrens zu schaffen, wird erfindungsgemäß dadurch gelöst, daß Sensormittel zur Erfassung der Kompressorleistung, der Kondensatorleistung und der Verdampferleistung vorgesehen sind und die Sensormittel gegebenenfalls unter Zwischenschaltung von Meßumformern mit einer gemeinsamen elektronischen Steuerschaltung verbunden sind, wobei die elektronische Steuerschaltung mindestens einen Mikroprozessor umfaßt, und daß die elektronische Steuerschaltung ausgangsseitig mit elektrisch ansteuerbaren Stellmitteln zur Beeinflussung der Kopressorleistung, der Kondensatorleistung und/oder der Verdampferleistung verbunden ist.

Ausführungsbeispiele der Erfindung sind nachstehend anhand der Zeichnung näher erläutert. In der Zeichnung zeigt:

Fig. 1     eine Einrichtung zur Steuerung und Überwades Kältemittelkreislaufs einer Kraftfahrzeugklimaanlage, wobei eine elektronische Steuerschaltung 1 mindestens einen Mikroprozessor umfaßt,

Fig. 2     eine Ausführungsvariante zu Fig. 1,

Fig. 3     eine Ausführungsvariante bezüglich der Kondensator- und Verdampferanordnung,

Fig. 4     eine Ausführung mit zusätzlichen Sensoren.

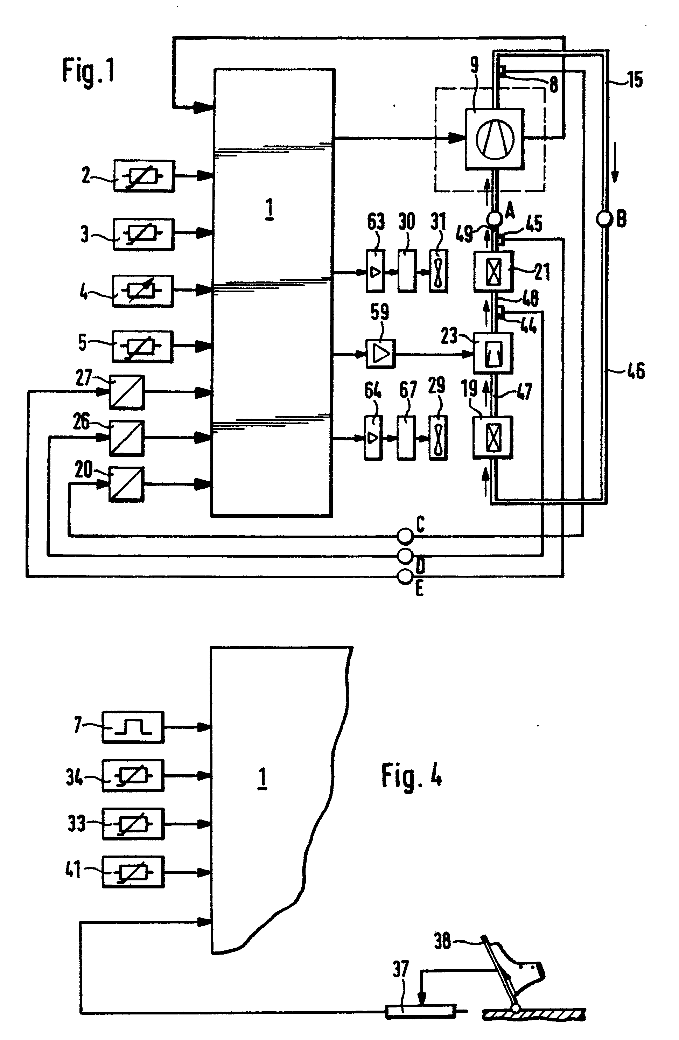

In Fig. 1 sind an die Eingangsanschlüsse einer elektronischen Steuerschaltung 1 ein Innenraumtemperaturfühler 2, ein Außentemperaturfühler 3, ein Sollwertsteller 4 und ein Sonneneinstrahlungsfühler 5 geschaltet. Ausgangsseitig ist die elektronische Steuerschaltung 1 mit einem stetig steuerbaren Kompressor 9 verbunden.

Ausgangsseitig des Kompressors 9 ist an einer Kältemittelleitung 15 ein Sensor 8 zur Erfassung der Heißgastemperatur angeordnet. Dieser Sensor 8 ist über einen Anschluß C mit einem Meßumformer 20 verbunden, der seinerseits an einen Eingang der elektronischen Steuerschaltung 1 geschaltet ist. Von der Druckseite des Kompressors 9 geht die Kältemittelleitung 15 zu einem Anschlußpunkt B. Von dem Anschlußpunkt B führt eine Kältemittelleitung 46 zu einem Kondensator 19.

Von dem Kondensator 19 führt eine Kältemittelleitung 47 zu einem Einspritzventil 23. Das Einspritzventil 23 ist über einen Leistungstreiber 59 mit einem Ausgang der elektronischen Steuerschaltung 1 verbunden und erhält von dieser die Steuersignale.

Von dem Einspritzventil 23 führt eine Kältemittelleitung 48 zu einem Verdampfer 21 von dem ausgangsseitig eine Kältemittelleitung 49 zu einen Anschlußpunkt A und von dort auf die Saugseite des Kompressors 9 führt.

An der Kältemittelleitung 48 ist ein weiterer Sensor 44 angeordnet, der die Einspritztemperatur oder den Druck des Kältemittels eingangsseitig des Verdampfers 21 erfaßt und über einen Anschlußpunkt D mit einem Signalumformer 26 verbunden ist, der seinerseits an einen Eingang der elektronischen Steuerschaltung 1 geschaltet ist. An der Kältemittelleitung 49 ist ein dritter Sensor 45 angeordnet, der den Saugdruck oder die Saugtemperatur erfaßt und von dem eine Fühlerleitung über einen Anschlußpunkt E zu einem Signalumformer 27 führt, der wiederum mit einem Eingang der Steuerschaltung 1 verbunden ist.

Dem Verdampfer 21 ist ein Verdampfergebläse 31 zugeordnet, das mittels eines steuerbaren Antriebselementes 30 angetrieben wird. Dieses schaltbare Antriebselement 30, beispielsweise ein Elektromotor unter Zwischenschaltung eines Leistungsverstärkers 63 ist mit der Ausgangsseite der Steuerschaltung 1 verbunden und erhält von dieser die Steuerimpulse nach Maßgabe der geforderten Leistung des Verdampfergebläses 31.

Dem Kondensator 19 ist ein Lüfter 29 zugeordnet, der über ein steuerbares Antriebselement 67 angetrieben wird. Zum Zwecke der Ansteuerung des Antriebselementes 67 ist dieses unter Zwischenschaltung eines Leistungsverstärkers 64 mit der Ausgangsseite der Steuerschaltung 1 verbunden. Die Leistungsverstärker 63 und 64 können beispielsweise als Strom- oder Spannungsregler ausgeführt sein.

Bei der in Fig. 1 gezeigten Steuer- und Überwachungseinrichtung eines Kältekreislaufs werden alle Sensorsignale der unterschiedlichen Sensoren 2, 3, 4, 5, 8, 44, 45 gegebenfalls unter Zwischenschaltung der Signalumformer 20, 26, 27 der Steuerschaltung 1 zugeführt und in dieser miteinander verknüpft. Die Berechnung von Ausgangssignalen erfolgt in der elektronischen Steuerschaltung 1 in Abhängigkeit bzw. unter Berücksichtigung aller Eingangsgrößen, um daraus eine optimale Betriebsweise der im Kältekreislauf befindlichen Komponenten zu erreichen. Die Steuerschaltung 1 beeinflußt die Antriebsleistung des Kompresors 9 und ein entsprechendes Signal der momentanen Kompressorleistung wird auf die Eingangsseite der Steuerschaltung 1 zurückgeführt.

Außerdem beeinflußt die Steuerschaltung 1 den Luftdurchsatz durch den Verdampfer 21 und zwar mit Hilfe des Verdampfergebläses 31, wobei die Steuerschaltung 1 nach Maßgabe des geforderten Luftdurchsatzes über den Leistungsverstärker 63 das Antriebselement 30 ansteuert. Ebenso wird der Luftdurchsatz durch den Kondensator 19 von der Steuerschaltung 1 bestimmt. Entsprechende Ausgangssignale der Steuerschaltung 1 werden über den Leistungsverstärker 64 dem Antriebeselement 67 zugeführt, das nach Maßgabe dieser Steuersignale den Lüfter 29 antreibt.

Auch das Einspritzventil 23, das bevorzugterweise als elektromagnetisch betätigbares Ventil ausgeführt ist, erhält seine Ansteuerimpulse über den Leistungstreiber 59 von der Steuerschaltung 1, wobei die in den Verdamfer 21 eingespritze Kältemittelmenge ebenfalls von der Berechnung des entsprechenden Ausgangssignals der Steuerschaltung 1 in Abhängigkeit der Eingangsgrößen erfolgt.

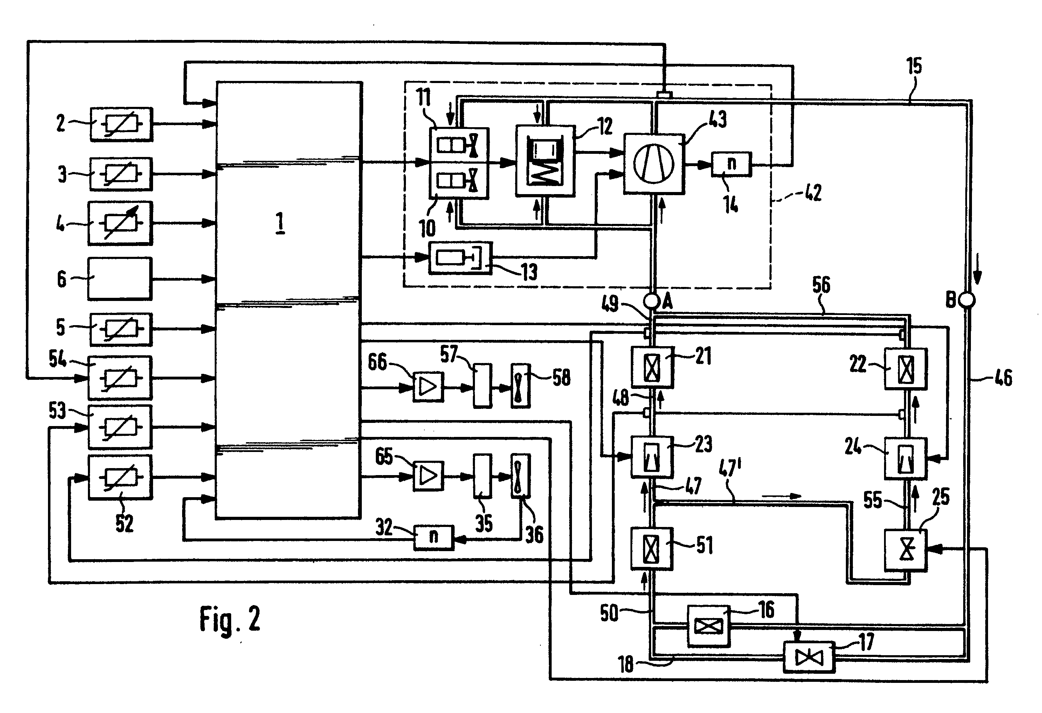

In Fig. 2 ist eine Ausführungsvariante zur Fig. 1 gezeigt, bei welcher der Kältemittelkreislauf umfangreicher gestaltet ist. Die elektronische Steuerschaltung 1 ist eingangsseitig mit einem Temperaturfühler 2, einem Außentemperaturfühler 3, einem Sollwertsteller 4 und einem Sonneneinstrahlungsfühler 5 beschaltet. Zusätzlich ist mit den Eingangsklemmen der Steuerschaltung 1 ein Feuchtigkeitsfühler 6 verbunden.

Mit 42 ist eine stetig steuerbare Kompressoreinheit bezeichnet, die einen Kompressor 43, ein Saugdruckventil 10 und ein Hochdruckventil 11, einen Steuerkolben 12 sowie eine schaltbare Kompressorkupplung 13 umfaßt. Die Kompressorkupplung 13, die mit einem in der Zeichnung nicht dargestellten Antrieb verbunden ist, ist über eine Steuerleitung mit einem Ausgang der Steuerschaltung 1 verbunden. Abtriebseitig wirkt die Kompressorkupplung 13 auf den Kompressor 43.

Das Saugdruckventil 10 und das Hochdruckventil 11 sind ebenfalls mit der Ausgangsseite der elektronischen Steuerschaltung 1 verbunden und werden von dieser angesteuert. Zwischen dem Sauganschluß und dem Hochdruckanschluß des Kompressors 43 befindet sich der Steuerkolben 12, durch den das geometrische Fördervolumen des Kompressors 43 einstellbar ist. Von dem Saugdruckventil 10 und Hochdruckventil 11 erfolgt eine Einwirkung auf den Steuerkolben 12 und von diesem wiederum auf den Kompressor 43. Mit dem Kompressor 43 ist ein Drehzahlsensor 14 verbunden, dessen Ausgangssignale an die Eingangsseite der Steuerschaltung 1 geführt werden.

An einer Kältemittelleitung 15 wird die Heißgastemperatur des Kältemittels von einem Heißgastemperaturfühler 54 erfaßt, der an einen Eingang der Steuerschaltung 1 geschaltet ist. Von der Kompressoreinheit 42 führt die Kältemittelleitung 15, die sogenannte Hochdruckleitung, zu dem Anschlußpunkt B. Von dem Anschlußpunkt B führt eine weitere Kältemittelleitung 46 zu einem Kältemittelkondensator 16. Der Kältemittelkondensator 16 ist durch eine Bypassleitung 18 überbrückt, in welche ein elektrisch betätigbares Absperrventil 17 geschaltet ist. Dem Kältemittelkondensator 16 und der Bypassleitung 18 ist ein weiterer Kältemittelkondensator 51 nachgeschaltet, wobei zwischen den beiden Kältemittelkondensatoren 16 und 51 eine Kältemittelleitung 50 vorgesehen ist.

Am Ausgang des zweiten Kältemittelkondensators 5 verzweigt sich die Kältemittelleitung 47, wobei ein Zweig der Kältemittelleitung 47 zu einem Einspritzventil 23 und der abgezweigte Teil 47' der Kältemittelleitung zu einem Absperrventil 25 führt. Von dem Einspritzventil 23 führt eine Kältemittelleitung 48 zu dem ersten Verdampfer 21, dessen Ausgang über die Kältemittelleitung 49 an den Anschlußpunkt A auf der Saugseite der Kompressoreinheit 42 geführt ist.

Von dem Absperrventil 25 führt eine Kältemittelleitung 55 zu einem zweiten Einspritzventil 24, dem ein zweiter Verdampfer 22 nachgeschaltet ist. Sofern das zweite Einspritzventil 24 als elektromagnetisch betätigbares Ventil ausgeführt ist und die Sperrfunktion des Absperrventils 25 miterfüllt, kann auf das Absperrventil 25 verzichtet werden. Ausgangsseitig ist der Verdampfer über eine Kältemittelleitung 56 mit dem Anschlußpunkt A auf der Saugseite der Kompressoreinheit 42 verbunden. Auf der Einspritzseite der beiden Verdampfer 21 und 22 wird jeweils die Einspritztemperatur des Kältemittels gemessen, und zwar mittels eines Einspritztemperaturfühlers 53, dessen Signal an die Eingangsseite der Steuerschaltung 1 geführt ist. Außerdem wird an den Kältemittelleitungen 49 und 56, das ist auf der Saugseite des Kompressors, die Saugrohrtemperatur mittels eines Saugrohrtemperaturfühlers 52 gemessen, der mit der Eingangsseite der Steuerschaltung 1 verbunden ist.

Die Absperrventile 17 und 25 sind vorzugsweise als elektromagnetische Ventile ausgeführt und mit entsprechenden Steuerleitungen an Ausgänge der elektronischen Steuerschaltung 1 angeschlossen. Die Einspritzventile 23 und 24, die ebenfalls als elektromagnetisch betätigbare Ventile ausgeführt sind, stehen über Steuerleitungen mit Ausgängen der Steuerleitung 1 in Verbindung. Den beiden Kältemittelkondensatoren 16 und 19 ist ein Kondensatorlüfter 36 zugeordnet, der von einem Gleichstrommotor 35 angetrieben wird. Dieser ist vorzugsweise ein mit pulsweitenmodulierter Pulsfolge angesteuerter Motor, wobei das pulsweitenmodulierte Signal von der Steuerschaltung 1 erzeugt und über einen Leistungsverstärker 65 dem Motor 35 zugeführt wird. Ein Drehzahlfühler 32 ist dem Lüfter 36 zugeordnet und der Drehzahlfühler 32 erzeugt ein der jeweiligen Drehzahl des Lüfters 36 entsprechendes Signal, welches der elektronischen Steuerschaltung 1 zugeführt wird.

Ein Verdampfergebläse 58 ist zur luftseitigen Beaufschlagung der Verdampfer 21 und 22 vorgesehen. Das Verdampfergebläse 58 wird von einem steuerbaren Elektromotor 57 angetrieben, wobei der Elektromotor 57 in ähnlicher Weise wie der Elektromotor 35 durch pulsweitenmodulierte Signale von der Steuerschaltung 1 über einen Leistungsverstärker 66 angesteuert wird. Auf diese Weise ergibt sich eine technisch einfache und verlustleistungsarme Regelung, die sowohl stufig als auch quasistetig sein kann. Sowohl für den Elektromotor 35 als auch für den Elektromotor 57 sollen die Pulsfolgen in einem Frequenzbereich von weniger als 1000 Hz, vorzugsweise unter 100 Hz liegen. Gegebenenfalls kann auch eine stetige Regelung vorgesehen sein.

Bei der in Fig. 2 gezeigten Steuer- und Überwachungseinrichtung eines Kältekreislaufs werden alle Sensorsignale der unterschiedlichen Sensoren 2, 3, 4, 5, 6, 52, 53 und 54 der Steuerschaltung 1 zugeführt und in dieser miteinander verknüpft. Zusätzlich werden der Steuerschaltung 1 die Signale der Drehzahlfühler 14 und 32 zugeführt, die mit den bereits erwähnten Eingangsgrößen verknüpft werden. Die Berechnung der Ausgangssignale erfolgt in der elektronischen Steuerschaltung 1 in Abhängigkeit bzw. unter Berücksichtigung aller Eingangsgrößen, um daraus eine optimale Betriebsweise der im Kältekreislauf befindlichen Komponenten zu erreichen. So wirkt die Steuerschaltung 1 auf das Saugdruckventil 10 und das Hochdruckventil 11 ein und steuert darüber hinaus mittels des Steuerkolbens 12 das geometrische Fördervolumen des Kompressors 43. Es wird jedoch nicht nur das geometrische Fördervolumen des Kompressors 43 eingestellt, sondern ebenso die Kompressordrehzahl bzw. Kompressorzuschaltdauer über die Kompressorkupplung 13, die ihre Steuersignale von der Steuerschaltung 1 erhält.

Auf diese Weise erzeugt die Kompressoreinheit 42 einen Hochdruck, der durch die Kältemittelleitungen 15 und 46 den Kältemittelkondensatoren 16 und 51 zugeführt wird. Der Kältemittelkondensator 16 wirkt nur, wenn das Absperrventil 17 geschlossen ist, ansonsten wird das Kältemittel vollständig durch den Bypass 18 zum Kältemittelkondensator 51 geleitet. Dabei hängt die Ansteuerung des Absperrventils 17 im wesentlichen davon ab, welche Kondensatorleistung zur optimalen Betriebsweise des Kältemittelkreislaufs erfoderlich ist. Sofern die Leistung des Kondensators 51 nicht ausreicht, kann zur Leistungssteigerung entweder der Kondensatorlüfter 36 betrieben bzw. dessen Drehzahl gesteigert werden, oder aber durch Schließen des Absperrventils 17 der zweite Kältemittelkondensator 16 zugeschaltet werden.

Je nach benötigter Kälteleistung kann wahlweise alleine der erste Verdampfer 21, oder es können wahlweise beide Verdampfer 21 und 22 gemeinsam betrieben werden. Zu diesem Zweck ist das Absperrventil 25 vor dem Einspritzventil 24 vorgesehen, wobei der Kälteleistungsbedarf von der Steuerschaltung 1 aufgrund der Eingangsgrößen, die die Sensoren liefern ermittelt wird. Die entsprechende Kältemittelmenge, die den Verdampfern 21 und 22 zugeführt wird, wird durch die Einspritzventile 23 und 24 dosiert, die wiederum von der Steuerschaltung 1 unter Berücksichtigung aller weiterer Parameter angesteuert werden.

Zur Beeinflussung der luftseitigen Beaufschlagung des Verdampfers 21 bzw. beider Verdampfer 21 und 22, ist die Drehzahl des Verdampfergebläses 58 variabel. Die Gebläsedrehzahlsteuerung erfolgt dadurch, daß dem Elektromotor 57 ein breits vorstehend erwähntes pulsbreitenmoduliertes Signal zugeführt wird.

Der Saugrohrtemperaturfühler 52, der Einspritztemperaturfühler 53, der Heizgastemperaturfühler 54 und der Drehzahlsensor 14 erfassen die wesentlichen Meßwerte, aus denen die Steuerschaltung 1 die jeweils aktuelle Kompressorleistung, die Kondensatorleistung und die Verdampferleistung ermittelt. Aus diesen Werten und den Größen der übrigen Sensoren wird daraus in der Steuerschaltung 1 der jeweilige Kälteleistungsbedarf errechnet und festgestellt, ob Gefahr der Verdampfervereisung oder des Flüssigkeitsschlags oder eines anderen kritischen Betriebszustands besteht.

Das Einwirken einer einzigen, für alle ansteuerbaren Stellglieder gemeinsam verantwortliche Steuerschaltung ermöglicht somit ein optimales Zusammenwirken aller am Kältekreislauf beteiligten Komponenten bei möglichst effizienter Energienutzung. Wesentlich für die optimale Prozessführung ist auch, daß gleichzeitig auf mehrere Stellglieder gemeinsam und auf einander abgestimmt eingewirkt werden kann, wobei die Steuereinrichtung aus den Rückmeldungen über die Sensoren Regelabweichungen äußerst schnell erkennt und so sehr frühzeitig in den Regelkreis eingreifen kann, wodurch ein Überschwingen der Regelgrößen vermieden wird.

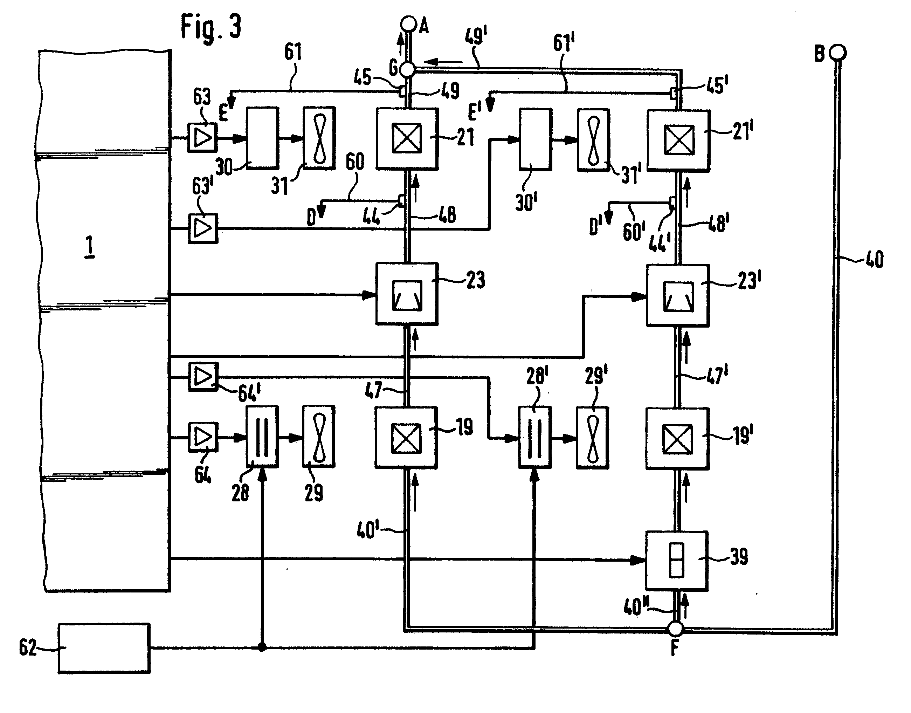

In Fig. 3 ist eine Ausführungsvariante einer Kondensator- und Verdampferanordnung gezeigt. Die übrigen Komponenten der Gesamtanlage können beispielsweise wie in Fig. 1 oder Fig. 2 dargestellt ausgeführt sein. Die Kompressoreinheit ist in Fig. 3 nicht dargestellt und wäre in Fig. 3 zwischen die Anschlußpunkte A und B geschaltet. Wie aus Fig. 3 ersichtlich ist, sind zwei Kondensator/Verdampfer-Einheiten vollständig parallel geschaltet. Vom Anschlußpunkt B führt eine Kältemittelleitung 40 zu einem Verzweigungspunkt F an dem die Kältemittelleitung 40 in zwei Teile 40' und 40'' verzweigt ist. Der Leitungszweig 40' führt zu einem ersten Kondensator 19.

Dem Kondensator 19 ist ein Lüfter 29 zugeordnet, der über eine schaltbare Kupplung 28, beispielsweise eine steuerbare Flüssigkeitsreibungskupplung, von einem Fahrzeugmotor 62 angetrieben wird. Zum Zwecke der Ansteuerung der schaltbaren Kupplung 28 ist diese über einen Leistungsverstärker 64 mit der Ausgangsseite der Steuerschaltung 1 verbunden.

Im Kältemittelleitungszweig 40'' ist ein Absperrventl 39 angeordnet, das an die Ausgangsseite der Steuerschaltung 1 geschaltet ist und von dieser Steuersignale erhält, und es ist ein zweiter Kondensator 19' vorhanden, der mit dem Absperrventil 39 in Reihe geschaltet ist. Das Absperrventil 39 kann entweder vor dem zweiten Kondensator 19' oder zwischen diesem und einem nachgeschalteten zweiten Einspritzventil 23' angeordnet sein. Sofern das zweite Einspritzventil 24 als elektromagnetisch betätigbares Ventil ausgeführt ist und die Sperrfunktion des Absperrventils 39 miterfüllt, kann auf das Absperrventil 39 verzichtet werden.

Für den zweiten Kondensator 19' ist ein zweiter Lüfter 29' vorgesehen, der mittels einer schaltbaren Kupplung 28' auf gleiche Weise wie der Lüfter 29 vom Antriebsmotor 60 des Fahrzeugs angetrieben wird. Die Ansteuerung der Kupplung 28' erfolgt jedoch völlig unabhängig von der Ansteuerung der Kupplung 28, wobei die Steuerleitung ein Leitungsverstärker 64' geschaltet ist.

Von dem Kondensator 19 führt eine Kältemittelleitung 47 zu einem ersten Einspritzventil 23, das mittels einer Steuerleitung mit der Steuerschaltung 1 verbunden und von dieser ansteuerbar ist. Dem Kondensator 19' ist ein zweites Einspritzventil 23' nachgeschaltet, zu welchem, ausgehend von dem Kondensator 19', eine Kältemittelleitung 47' führt. Auch das zweite Einspritzventil 23' ist mittels einer Steuerleitung mit der Steuerschaltung 1 verbunden und wird von dieser angesteuert, wobei die Ansteuerung jedoch völlig unabhängig von derjenigen des Einspritzventils 23 erfolgt.

Von dem Einspritzventil 23 führt eine Kältemittelleitung 48 zu einem ersten Verdampfer 21. An der Kältemittelleitung 48 ist ein Sensor 44 angeordnet, von dem eine Fühlerleitung 60 zu einem Anschlußpunkt D führt, wie dies beispielsweise in Fig. 3 gezeigt ist, und von dort weiter auf die Eingangsseite der Steuerschaltung 1. Von dem zweiten Einspritzventil 23' führt eine Druckmittelleitung 48' zu einem zweiten Verdampfer 21', wobei an der Kältemittelleitung 28' vor Eintritt in den Verdampfer 21' ein Sensor 44' angeordnet ist, von dem eine Fühlerleitung 60' zu einem Anschlußpunkt D' führt.

Ausgangsseitig ist an die Verdampfer 21 und 21' jeweils eine Kältemittelleitung 49 und 49' angeschlossen und beide Kältemittelleitungen vereinigen sich am Einmündungspunkt G. Von dem Einmündungspunkt G führt die Kältemittelleitung zum Anschlußpunkt A. Ausgangsseitig des Verdampfers 21 ist an der Kältemittelleitung ein Sensor 45 und ausgangsseitig des zweiten Verdampfers 21' ist ein Sensor 45' vorgesehen, wobei diese Sensoren zur Erfassung des Saugrohrdruckes oder der Saugrohrtemperatur dienen können. Über entsprechende Fühlerleitungen 61 und 61' sind die Sensoren 45 und 45' an Anschlußpunkte E bzw. E' geschaltet, entsprechend der Darstellung in Fig. 1.

Dem ersten Verdampfer 21 ist ein erstes Verdampfergebläse 31 zugeordnet, das mittels eines schaltbaren Antriebelementes 30, beispielsweise einem Elektromotor angetrieben wird. Dieses Antriebselement 30 ist mittels einer Steuerleitung und unter Zwischenschaltung eines Verstärkers 63 mit der Steuerschaltung 1 verbunden und wird von dieser angesteuert. Auf gleiche Weise ist dem zweiten Verdampfer 21' ein zweites Verdampfergebläse 31' zugeordnet, das in der bereits beschriebenen Weise mittels eines steuerbaren Antriebselementes 30' angetrieben und von der Steuerschaltung 1 über einen Leistungsverstärker 63' angesteuert wird. Auch der Betrieb der beiden Verdampfergebläse 31 und 31' erfolgt unabhängig voneinander entsprechend den jeweiligen Steuerbefehlen, die die Steuerschaltung 1 über die Verstärker 63 und 63' an die Antriebselemente 30 und 31 gibt.

Die in Fig. 3 dargestellte Ausführungsvariante der Kondensator- und Verdampferanordnung kann beispielsweise mit Teilen der Fig. 1 oder Fig. 2 kombiniert werden, das heißt die Anordnung gemäß Fig. 3 kann den Teil des Kältemittelkreislaufs vom Anschlußpunkt B zum Anschlußpunkt A in Fig. 1 oder Fig. 2 ersetzen. Die Funktionsweise einer derart kombinierten Anordnung entspricht im wesentlichen den Beschreibungen zu Fig. 1 und Fig. 2.

In den Anordnungen gemäß Fig. 1 bis Fig. 3 sind alternativ als Antriebselemente für die Kondensatorgebläse 29, 29' und 36 elektromagnetische Kupplungen oder auch Hydromotoren in Betracht zu ziehen. Als Leistungsverstärker 63, 63' und 65 würden im erstgenannten Fall Relais und im letztgenannten Fall elektrisch betätigte Hydraulikventile eingesetzt.

Fig. 4 zeigt eine Ausführung der elektronischen Steuerschaltung 1 mit zusätzlichen Sensoren für bestimmte Betriebszustände des Antriebsmotors sowie dessen Kühlung und Schmiermittelkühlung. In dieser Ausführungsform sind eingangsseitig an die elektronische Steuerschaltung 1 zusätzlich ein Motordrehzahlfühler 7, ein Temperaturfühler 33 für das Kühlwasser des Antriebsmotors, ein Temperaturfühler 34 für das Motoröl und ein Temperaturfühler 41 für das Getriebeöl geschaltet. Die aufgrund der Fühlersignale an den Eingängen der Steuerschaltung 1 anstehenden Eingangsgrößen werden in Verbindung mit den übrigen, bereits zu Fig. 1 und Fig. 2 beschriebenen Eingangsgrößen für die Berechnung der Ansteuersignale der von der Steuerschaltung 1 angesteuerten Stellmittel berücksichtigt.

In Fig. 4 ist darüber hinaus ein Sensor 37 vorgesehen, der die Stellung eines Fahrpedals 38, bzw. auch die Bewegung des Fahrpedals 38 durch in der Steuerschaltung erfolgende Berechnung erfaßt. Die jeweilige Stellung des Fahrpedals 38 ist durch das momentane Sensorsignal des Sensors 37 direkt erfaßbar und die Bewegung des Fahrpedals 38 wird dadurch ermittelt, daß zwei zeitlich aufeinander folgende Abfragen des Sensorsignals 37 miteinander verglichen und daraus die Differenz der beiden Eingangsgrößen gebildet wird. Die Differenz bildet somit das Maß für die Zustandsänderung am Sensor bzw. die Bewegung des Fahrpedals 38. Auf diese Weise ist es möglich, den Kompressor und gegebenenfalls auch die Gebläse- und Lüfterantriebe in Phasen starker Beschleunigung des Antriebsmotors temporär abzuschalten, damit beispielsweise für Überholvorgänge eine möglichst große Leistung an den Antriebsrädern des Fahrzeugs zur Verfügung steht.

Darüber hinaus kann aufgrund einer Verknüpfung der Sensorsignale des Drehzahlsensors 7 und des Sensors 37 am Fahrpedal 38 festgestellt werden, ob das Fahrzeug sich im sogenannten Schubbetrieb befindet. Im Schubbetrieb kann durch Zuschalten des Kompressors eine zusätzliche Bremswirkung des Motors erreicht werden, da der Kompressor einige kW Antriebsleistung des Motors aufnimmt, wodurch die Reibungsbremse des Fahrzeugs entlastet wird. Im übrigen wird in diesem Fall die Energie noch sinnvoll genutzt, die sonst in Wärme umgewandelt würde, und zwar an einer nicht nutzbaren Stelle.

**Patentansprüche**

1. Verfahren zur Steuerung einer Kraftfahrzeugklimaanlage mit einem Kältekreislauf, der zumindest einen leistungsgeregelten Kältemittelverdichter (43), einen Kältemittelkondensator (16, 51), einen Verdampfer (16, 21) und eine stromauf des Verdampfers angeordnete Drosseleinrichtung (23, 24) für das Kältemittel umfaßt, wobei dem Kondensator ein Lüfter zur Kühlluftbeaufschlagung zugeordnet und zur Erzeugung eines Luftstromes durch den Verdampfer ein Gebläse (58) vorgesehen ist, wobei die Kondesatorleistung und die Verdampferleistung direkt oder indirekt von Sensormitteln (52, 53) erfaßt und als elektrische Größe den Eingangsklemmen einer gemeinsamen elektronischen Steuerschaltung (1) zugeführt werden und die Ausgangssignale elektrisch ansteuerbaren Stellmitteln bzw. Antriebselementen zur Beeinflußung der Kompressorleistung, der Kondensatorleistung und der Verdampferleistung zugeführt werden , **dadurch gekennzeichnet,** daß die Kompressorleistung unter Einbeziehung der Kompressordrehzahl erfaßt und mit den anderen Eingangssignalen der genannten Leistungen verknüpft und in Abhängigkeit von mindesten zweien dieser Leistungswerte und der Einbeziehung der Parameter für den Kälteleistungsbedarf, die Verdampfervereisung, die Verdichtungsendtemperatur und den Flüssigkeitsschlag die genannten Ausgangssignale erzeugen, wobei als Maß für die Verdichtungsendtemperatur die Temperatur des Kältemittels auf der Hochdruckseite des Kompressors (9, 43) dient und zur Bestimmung der Gefahr eines Flüssigkeitsschlags sowohl der Druck als auch die Temperatur auf der Saugseite des Kompressors (9, 43) gemessen und diesen Werten entsprechende elektrische Signale der Steuerschaltung (1) zugeführt werden.

2. Verfahren nach Anspruch 1, **dadurch gekennzeichnet,** daß zur Beeinflussung der Kompressorleistung das geometrische Fördervolumen durch eine direkte Hubveränderung oder durch Steuerung des Schließzeitpunktes des Verdichtungsraumes verändert wird.

3. Verfahren nach Anspruch 1, **dadurch gekennzeichnet,** daß zur Beeinflussung der Kompressorleistung die Drehzahl des Kompressors (9, 43,) gesteuert wird.

4. Verfahren nach Anspruch 1, **dadurch gekennzeichnet,** daß zur Beeinflussung der Kompressorleistung der Füllungsgrad des Kompressors (9, 43) durch eine veränderliche Ansaugdrosselung gesteuert wird.

5. Verfahren nach einem der Ansprüche 1 bis 4, **dadurch gekennzeichnet,** daß zur Beeinflussung der Kondensatorleistung der Luftdurchsatz durch den Kondensator (16, 19, 19') gesteuert wird, und zwar durch Steuerung der Drehzahl des Lüfters (29, 29', 36) und/oder mittels einer von einem Stellmotor betätigten Jalousie.

6. Verfahren nach einem der Ansprüche 1 bis 5, **dadurch gekennzeichnet,** daß zur Beeinflussung der Verdampferleistung der Luft durchsatz durch den Verdampfer (21, 21', 22) infolge der Drehzahlregelung des Gebläses (31, 31', 58) gesteuert wird.

7. Verdampfer nach einem der Ansprüche 1 bis 5, **dadurch gekennzeichnet,** daß zur Beeinflussung der Verdampferleistung der Kältemittelstrom mit Hilfe einer Drosseleinrichtung bzw. eines Einspritzventils (23, 23', 24) steuerbar ist.

8. Verfahren nach Anspruch 3, **dadurch gekennzeichnet,** daß die Kompressordrehzahl mittels eines Riementriebs oder Planetengetriebes eines drehzahlgeregelten Elektromotors oder eines regelbaren hydrostatischen Antriebs steuerbar ist.

9. Verfahren nach Anspruch 5, **dadurch gekennzeichnet,** daß die Lüfterdrehzahl mittels einer elektrisch steuerbaren Viskokupplung (28 28'), einer elektromagnetischen Kupplung, eines drehzahlgesteuerten Elektromotors (35, 67) oder eines hydrostatischen Antriebs regelbar ist.

10. Verfahren nach Anspruch 9, **dadurch gekennzeichnet,** daß zur Regelung der Lüfterdrehzahl die Regelcharakteristik unstetig (Zweipunkt-Regelung), mehrstufig oder stetig ist.

11. Verfahren nach Anspruch 6 oder 9, **dadurch**

**gekennzeichnet,** daß zur Regelung des Lüfterantriebs (28, 28', 35, 67) oder des Gebläseantriebs (30, 30', 57,) die Regelcharakteristik quasistetig ist, wobei die Taktfrequenz des Signals 1.000 Hz, vorzugsweise 100 Hz ist.

12. Verfahren nach Anspruch 5, **dadurch gekennzeichnet,** daß der Lüfter (29, 29', 36) hydrostatisch angetrieben wird und zur Steuerung der Lüfterdrehzahl die elektronische Steuerschaltung (1) entsprechende Ausgangssignale gegebenenfalls über einen Leistungsverstärker (65) einem elektromechanischen Stellglied zuführt, das auf ein Regelventil des hydrostatischen Antriebssystems wirkt.

13. Verfahren nach Anspruch 7, **dadurch gekennzeichnet,** daß die Drosseleinrichtung bzw. das Einspritzventil (23, 23', 24) elektrisch ansteuerbar ist, wobei die Regelung stetig oder quasistetig ist, und im Falle der quasi-stetigen Regelung die Ansteuerung der Drosseleinrichtung mittels impulsbreiten modulierter Takte erfolgt.

14. Verfahren nach einem der Ansprüche 1 bis 13, **dadurch gekennzeichnet,** daß die Ermittlung des Kälteleistungsbedarfs in Abhängigkeit der Signale mindestens je eines Innenraumtemperaturfühlers (2), Außentemperaturfühlers (3), Sollwertstellers (4), Feuchtigkeitsfühlers (6) und eines Sonneneinstrahlungsfühlers (5) erfolgt.

15. Verfahren nach einem der Ansprüche 1 bis 14, **dadurch gekennzeichnet,** daß als Maß für die Verdampfervereisung der Saugdruck mittels eines Druckfühlers (45, 45') gemessen und das entsprechende Signal mittels eines Signalumformers (27) in eine elektrische Größe umgewandelt wird.

16. Verfahren nach einem der Ansprüche 1 bis 14, **dadurch gekennzeichnet,** daß als Maß für die Verdampfervereisung die Temperatur oder der Druck des Kältemittels und/oder die Oberflächentemperatur im Verdampfernetz und/oder die Luftaustrittstemperatur stromab des Verdampfers (21, 21', 22) gemessen und ein entsprechendes elektrisches Signal der elektronischen Steuerschaltung (1) zugeführt wird.

17. Verfahren nach einem der Ansprüche 1 bis 16, **dadurch gekennzeichnet,** daß die Drehzahl des Antriebsmotors des Fahrzeugs mittels einer Sensoreinrichtung (7) erfaßt und der elektronischen Steuerschaltung (1) zugeführt wird, daß die elektronische Steuerschaltung (1) das Überschreiten einer vorgegebenen Drehzahl feststellt und außerdem aus jeweils zwei zeitlich aufeinanderfolgenden Werten für die Motordrehzahl die Größe der Beschleunigung errechnet.

18. Verfahren nach einem der vorhergehenden Ansprüche, **dadurch gekennzeichnet,** daß ein Sensor (37) die Stellung und/oder Bewegung des Fahrpedals (38) erfaßt und ein entsprechendes Signal der elektronischen Steuerschaltung (1) zuführt.

19. Verfahren nach einem der Ansprüche 14 bis 18, **dadurch gekennzeichnet,** daß die elektronische Steuerschaltung zur Berechnung der Ausgangssignale für die Ansteuerung der Stellmittel bzw. Antriebselemente (13, 23, 23', 24, 28, 28', 30, 30', 35, 57, 67) zusätzlich die Werte der Kühlmitteltemperatur des Motorkühlmittels und/oder der Kompressordrehzahl und/oder der Drehzahl des dem Kondensator (16, 19, 19') zugeordneten Lüfters (29, 29', 36) und/oder des dem Verdampfergebläses (31, 31', 58) einbezieht.

20. Verfahren nach einem der Ansprüche 14 bis 18, **dadurch gekennzeichnet,** daß die elektronische Steuereinrichtung (1) zur Berechnung der Ausgangssignale für die Ansteuerung der Stellmittel bzw. Antriebselemente (10, 11, 13, 23, 23', 24, 28, 30, 30', 35, 57, 67) zusätzlich die Werte der Öltemperatur des Motoröls und/oder des Getriebeöls, der Ladelufttemperatur und des Staudrucks einbezieht, wobei letzterer aus der Fahrgeschwindigkeit abgeleitet wird.

21. Verfahren nach Anspruch 18, **dadurch gekennzeichnet,** daß die elektronische Steuerschaltung (1) aus dem Signal des Sensors (37), der die Stellung und/oder Bewegung des Fahrpedals (38) erfaßt, und dem Signal eines Motordrehzahlfühlers (7) die Betriebsphasen des sogenannten Schubtriebs ermittelt und in diesen Betriebsphasen die Klimaanlage auf ihre volle Leistung zugeschaltet wird.

22. Kraftfahrzeugklimaanlage zur Durchführung des Verfahrens nach Anspruch 1 mit einem Kältekreislauf, der zumindest einen leistungsgeregelten Kältemittelverdichter, einen Kondensator, einen Verdampfer und eine stromauf des Verdampfers angeordnete Drosseleinrichtung für das Kältemittel umfaßt, wobei dem Kondensator ein Lüfter zur Kühlluftbeaufschlagung zugeordnet und zur Erzeugung eines Luftstromes durch den Verdampfer ein Gebläse vorgesehen ist, **dadurch gekennzeichnet,** daß Sensormittel (8, 14, 44, 44', 45, 45') zur Erfassung der Kompressorleistung, der Kondensatorleistung und der Verdampferleistung vorgesehen sind und die Sensormittel (8, 8', 14, 44, 44', 45, 45') gegebenenfalls unter Zwischenschaltung von Meßumformern (20, 26, 27) mit einer gemeinsamen elektronischen Steuerschaltung (1) verbunden sind, wobei die elektronische Steuerschaltung (1) mindestens einen Mikroprozessor um- faßt, und daß die elektronische Steuerschaltung (1) ausgangsseitig mit elektrisch ansteuerbaren Stell- mitteln (10, 11, 13, 23, 23', 28, 28', 30, 30', 35, 57) zur Beeinflussung der Kompressorleistung, der Kondensatorleistung und/oder der Verdampferleistung verbunden ist.

23. Kraftfahrzeugklimaanlage nach Anspruch 22, **dadurch gekennzeichnet,** daß sie folgende Sensormittel umfaßt:
   - einen Drehzahlsensor (14) für die Drehzahl des Kompressors (43),
   - einen Heißgastemperaturfühler (54),
   - einen Temperaturfühler (53), der die Einspritztemperatur des Kältemittels im Verdampfer (21, 22) erfaßt,
   - einen Temperaturfühler (52), der die Temperatur des Kältemittels auf der Saugseite des Verdampfers (21, 22) erfaßt,
   und
   - einen Drehzahlsensor (32) für den Kondensatorlüfter (36).

24. Kraftfahrzeugklimaanlage nach Anspruch 22 oder 23, **dadurch gekennzeichnet,** daß zwei funktionsmäßig parallel geschaltete Verdampfer (21, 22) mit je einem Einspritzventil (23, 24) vorhanden sind, wobei in der Kältemittelleitung vor einem der Einspritzventile (24) ein elektrisch bestätigbares Absperrventil (25) angeordnet ist, welches mit den Ausgangsanschlüssen der elektronischen Steuerschaltung (1) verbunden ist.

25. Kraftfahrzeugklimaanlage nach Anspruch 24, **dadurch gekennzeichnet,** daß der parallel geschaltete Kältemittelzweig (Verdampfer 21', 22) mittels des Einspritzventils (23', 24) durch Ansteuerung von der elektronischen Steuerschaltung (1) absperrbar ist.

26. Kraftfahrzeugklimaanlage nach Anspruch 24 oder 25, **dadurch gekennzeichnet,** daß ein zweiter Kondensator (19') parallel zu dem ersten Kondensator (19) vorgesehen ist und sich ein Absperrventil (39) in Reihe zu diesem zweiten, parallelen Kondensator (19') befindet.

27. Kraftfahrzeugklimaanlage nach einem der Ansprüche 22 bis 25, **dadurch gekennzeichnet,** daß zu dem Kondensator (51) ein zweiter Kondensator (16) in Reihe geschaltet ist, und daß eine den zweiten Kondensator (16) überbrückende Bypaßleitung (18) vorhanden ist, in die ein Absperrventil (17) geschaltet ist.

28. Kraftfahrzeugklimaanlage nach einem der Ansprüche 24 bis 27, **dadurch gekennzeichnet,** daß dem zweiten Verdampfer (21') ein zusätzliches Verdampfergebläse (31') und/oder dem zweiten Kondensator (19') ein zusätzlicher Lüfter (29') zugeordnet ist.

29. Kraftfahrzeugklimaanlage nach Anspruch 23, **dadurch gekennzechnet,** daß sie zusätzlich folgende Sensormittel umfaßt:
   - mindestens einen Innenraumtemperaturfühler (2),
   - einen Außentemperaturfühler (3),
   - einen Sollwertsteller (4),
   - einen Sonneneinstrahlungsfühler (5),
   und
   - einen Feuchtigkeitsfühler (6).

30. Kraftfahrzeugklimaanlage nach einem der Ansprüche 23 oder 29, **dadurch gekennzeichnet,** daß sie folgende Sensormittel umfaßt:
   - einen Motordrehzahlfühler (7),
   - einen Temperaturfühler (33) für das Kühlwasser des Antriebsmotors,
   - einen Temperaturfühler (34) für das Motoröl,
   und
   - einen Temperaturfühler (41) für das Getriebeöl.

31. Kraftfahrzeugklimaanlage nach einem der Ansprüche 22 bis 30, **dadurch gekennzeichnet,** daß ein mit einem Fahrpedal (38) gekoppelter Sensor (37) vorgesehen ist, wobei der Sensor derart gestaltet ist, daß er den Weg des Fahrpedals (38) als Eingangsgröße erfaßt und seinen Ausgang ein elektrisches Signal liefert.

32. Kraftfahrzeugklimaanlage nach einem der Ansprüche 22 bis 31, **dadurch gekennzeichnet,** daß eine steuerbare Kompressoreinheit (42) vorgesehen ist, die einen Kompressor (43), ein Saugdruckventil (10) ein Hochdruckventil (11), einen Steuerkolben (12) zur Beeinflussung des geometrischen Fördervolumens des Kompressors (43) und eine steuerbare Kompressorkupplung (13) umfaßt.

**Claims**

1. Method of controlling a motor vehicle air conditioner having a refrigeration circuit which comprises at least one power controlled refrigerant compressor (43), a refrigerant condenser (16, 51), an evaporator (16, 21) and a refrigerant throttling device (23, 24) arranged upstream from the evaporator, the condenser being associated with a fan for supplying cooling air and a blower (58) being provided to generate an air stream through the evaporator, the condenser output and evaporator output being detected directly or indirectly by sensor means (52, 53) and fed as electric variables to the input terminals of a common electronic control circuit (1) and the output signals being fed to electrically triggerable control means or driving elements to influence the compressor capacity, condenser capacity and evaporator capacity, characterised in that the compressor capacity, including the compressor speed, are recorded and combined with the other input signals of the said capacities and, depending on at least two of these capacity values and on the incorporation of parameters applying to the required refrigerating capacity, evaporator icing, ultimate compression temperature and liquid impact, the mentioned output signals are generated, the temperature of the refrigerant on the high pressure side of the compressor (9, 43) serving as a measure of the ultimate compression temperature and both the pressure and the temperature being measured on the inlet side of the compressor (9, 43) to determine the danger of a liquid impact and electric signals which correspond to these values being fed to the control circuit (1).

2. Method according to Claim 1, characterised in that to influence the compressor capacity, the geometric swept volume is varied by a direct variation in the stroke or by controlling the closing time of the compression space.

3. Method according to Claim 1, characterised in that the speed of the compressor (9, 43) is controlled to influence the compressor capacity.

4. Method according to Claim 1, characterised in that to influence the compressor capacity, the degree of filling of the compressor (9, 43) is controlled by a variable intake throttling action.

5. Method according, to any one of Claims 1 to 4, characterised in that to influence the condenser capacity, the air flow rate through the condenser (16, 19, 19') is controlled, that is by controlling the speed of the fan (29, 29', 36) and/or by means of a shutter actuated by a servomotor.

6. Method according to any one of Claims 1 to 5, characterised in that to influence the evaporator capacity, the air flow rate through the evaporator (21, 21', 22) is controlled as a result of regulating the speed of the blower (31, 31', 58).

7. Method according to any one of Claims 1 to 5, characterised in that to influence the evaporator capacity, the refrigerant flow can be controlled with the aid of a throttling device or an injection valve (23, 23', 24).

8. Method according to Claim 3, characterised in that the compressor speed can be controlled by means of a belt drive or planetary gear of a speed-controlled electric motor or of a controllable hydrostatic drive.

9. Method according to Claim 5, characterised in that the fan speed can be controlled by means of an electrically controllable fluid clutch (28, 28'), an electromagnetic clutch, a speed-controlled electric motor (35, 67) or a hydrostatic drive.

10. Method according to Claim 9, characterised in that to control the fan speed, the control characteristic is discontinuous (two position control), multistage or continuous.

11. Method according to Claim 6 or 9, characterised in that to control the fan drive (23, 28', 35, 67) or the blower drive (30, 30', 57), the control characteristic is quasi-continuous, the clock frequency of the signal being 1000 Hz, and preferably 100 Hz.

12. Method according to Claim 5, characterised in that the fan (29, 29', 36) has a hydrostatic drive and, to control the fan speed, the electronic control circuit (1) feeds corresponding output signals, if necessary via a power amplifier (65), to an electromechanical actuator which acts on a control valve of the hydrostatic drive system.

13. Method according to Claim 7, characterised in that the throttling device or the injection valve (23, 23', 24) can be triggered electrically, the control being continous or quasi-continuous and, in the case of the quasi-continuous control, the throttling device being triggered by means of pulse-width modulated cycles.

14. Method according to any one of Claims 1 to 13, characterised in that the required refrigerating capacity is determined depending on each of the signals of at least an interior temperature sensor (2), external temperature sensor (3), set-point adjuster (4), humidity sensor (6) and solar radiation sensor (50.

15. Method according to any one of Claims 1 to 14, characterised in that the suction pressure is measured by means of a pressure sensor (45, 45') as a measure applying to evaporator icing and the corresponding signal is converted into an electric variable by means of a signal transducer (27).

16. Method according to any one of Claims 1 to 14, characterised in that the temperature or pressure of the refrigerant and/or the surface temperature in the evaporator network and/or the air outlet temperature downstream from the evaporator (21, 21', 22) is measured as a measure applying to evaporator icing.

17. Method according to any one of Claims 1 to 16, characterised in that the speed of the driving engine of the vehicle is detected by means of a sensor device (7) and fed to the electronic control circuit (1), that the electronic control circuit (1) detects the exceeding of a preset speed and, in addition, calculates the extent of the acceleration from each pair of temporally consecutive values applying to the engine speed.

18. Method according to any one of the preceding Claims, characterised in that a sensor (37) detects the position and/or movement of the accelerator pedal (38) and feeds a corresponding signal to the electronic control circuit (10.

19. Method according to any one of Claims 14 to 18, characterised in that to calculate the output signals for triggering the control means or drive elements (13, 23, 23', 24, 28, 28', 30, 30', 35, 57, 67), the electronic control circuit also incorporates the values of the coolant temperature of the engine coolant and/or compressor speed and/or the speed of the fan (29, 29', 36) associated with the condenser (16, 19, 19') and/or of the evaporator blower (31, 31', 58).

20. Method according to any one of Claims 14 to 18, characterised in that to calculate the output signals for triggering the control means or drive elements (10, 11, 13, 23,23', 24, 28, 30, 30', 35, 57, 67), the electronic control circuit (1) also incorporates the values of the oil temperature of the engine oil and/or gear lubricant oil, the charge air temperature and dynamic pressure, the latter being derived from the driving speed.

21. Method according to Claim 18, characterised in that the electronic control circuit (1) determines the operating phases of the so called propulsion mode from the signal of the sensor (37) which detects the position and/or movement of the accelerator pedal (38) and from the signal of an engine speed sensor (7), and during these operating phases the air conditioner is switched to its full capacity.

22. Motor vehicle air conditioner for putting into practice the method according to Claim 1 having a refrigerating circuit which comprises at least one power-controlled refrigerant compressor, a condenser, an evaporator and a refrigerant throttling device arranged upstream from the evaporator, the condenser being associated with a fan for supplying cooling air and a blower being provided to generate an air stream through the evaporator, characterised in that sensor means (8, 14, 44, 44', 45, 45') are provided for detecting the compressor capacity, condenser capacity and evaporator capacity end the sensor means (8, 8', 14, 44, 44', 45, 45') are connected to a common electronic control circuit (1), if necessary, with the interposition of measuring transducers (20, 26, 27), the electronic control circuit (1) comprising at least one microprocessor, and that the electronic control circuit (1) is connected on the output side to electrically triggerable control means (10, 11, 13, 23, 23', 28, 28', 30, 30', 35, 57) to influence the compressor capacity, condenser capacity and/or evaporator capacity.

23. Motor vehicle air conditioner according to Claim 22, characterised in that it comprises the following sensor means:
   - a speed sensor (14) for the speed of the compressor (43),
   - a hot gas temperature sensor (54),
   - a temperature sensor (53) which detects the injection temperature of the refrigerant in the evaporator (21, 22),
   - a temperature sensor (52) which detects the temperature of the refrigerant on the inlet side of the evaporator (21, 22), and
   - a speed sensor (32) for the condenser fan (36).

24. Motor vehicle air conditioner according to Claim 22 or 23, characterised in that there are provided two evaporators (21, 22) functionally connected in parallel and each having an injection valve (23, 24), an electrically operatable shutoff valve (25) which is connected to the output connections of the electronic control circuit (1) being arranged in the refrigerant line in front of one of the injection valves (24).

25. Motor vehicle air conditioner according to Claim 24, characterised in that the parallel connected refrigerant branch line (evaporator 21', 22) can be shut off with the aid of the injection valve (23', 24) by triggering of the electronic control circuit (10.

26. Motor vehicle air conditioner according to Claim 24 or 25, characterised in that a second condenser (19') is provided parallel to the first condenser (19) and a shutoff valve (39) is arranged in series with this second parallel condenser (19').

27. Motor vehicle air conditioner according to any one of Claims 22 to 25, characterised in that a second condenser (16) is connected in series with the condenser (51), and that there is provided a by-pass (18) which bridges the second condenser (16) and in which a shutoff valve (17) is inserted.

28. Motor vehicle air conditioner according to any one of Claims 24 to 27, characterised in that the second evaporator (21') is associated with an additional evaporator blower (31') and/or the second condenser (19') with an additional fan (29').

29. Motor vehicle air conditioner according to Claim 23, characterised in that it also comprises the following sensor means:
    - at least one interior temperature sensor (2),
    - an external temperature sensor (3),
    - a set-point adjuster (4),
    - a solar radiation sensor (5) and
    - a humidity sensor (6).

30. Motor vehicle air conditioner according to any one of Claims 23 or 29, characterised in that it comprises the following sensor means:
    - an engine speed sensor (7),
    - a temperature sensor (33) for the cooling water of the driving engine,
    - a temperature sensor (34) for the engine oil, and
    - a temperature sensor (41) for the gear lubricant oil.

31. Motor vehicle air conditioner according to any one of Claims 22 to 30, characterised in that there is provided a sensor (37) which is connected to an accelerator pedal (38), the sensor being designed in such a manner that it detects the travel of the accelerator pedal (38) as an input variable and delivers an electric signal to its output.

32. Rotor vehicle air conditioner according to any one of Claims 22 to 31, characterised in that there is provided a controllable compressor unit (42) which comprises a compressor (43), a suction pressure valve (10), a high pressure valve (11), a piston valve (12) for influencing the geometric swept volume of the compressor (43) and a controllable compressor coupling (13).

**Revendications**

1. Procédé pour la commande d'une installation de climatisation d'un véhicule automobile, possédant un cycle frigorifique qui comprend au moins un compresseur de frigorigène (43) dont la puissance est réglée, un condenseur de frigorigène (16, 51), un évaporateur (16, 21) et un dispositif d'étranglement (23, 24) pour le frigorigène, qui est installé en amont de l'évaporateur, avec coordination au condenseur d'un ventilateur pour diriger de l'air de refroidissement sur ce condenseur, et avec prévision d'une souffante (58) pour produire un courant d'air à travers l'évaporateur, la puissance du condenseur et la puissance de l'évaporateur étant détectées directement ou indirectement par des moyens de captage (52, 53) et étant appliquées sous forme de grandeur électrique aux bornes d'entrée d'un circuit de commande électronique (1) commun dont les signaux de sortie sont envoyés à des moyens de positionnement ou des éléments d'entraînement, pouvant être pilotés ou alimentés électriquement, pour agir sur la puissance du compresseur, la puissance du condenseur et la puissance de l'évaporateur, caractérisé en ce qu'il comprend la détection de la puissance du compresseur, avec inclusion de la vitesse de rotation du compresseur, la combinaison de la puissance du compresseur aux autres signaux d'entrée des puissances mentionnées et la production des signaux de sortie mentionnés en fonction d'au moins deux de ces valeurs de puissance et avec prise en compte des paramètres pour le besoin de puissance frigorifique, la formation de glace dans l'évaporateur, la température finale de compression et le risque d'un choc de liquide, la température du frigorigène sur le côté haute pression du compresseur (9, 43) servant de mesure pour la température finale de compression et la détermination du risque d'un choc de liquide comprenant la mesure à la fois de la pression et de la température sur le côté aspiration du compresseur (9, 43) et l'application de signaux électriques correspondant à ces valeurs au circuit de commande (1).

2. Procédé selon la revendication 1, caractérisé en ce que, pour contrôler la puissance du compresseur, on change le volume géométrique déplacé ou cylindrée par une variation directe de la course ou par le contrôle de l'instant de fermeture de la chambre de compression.

3. Procédé selon la revendication 1, caractérisé en ce que, pour contrôler la puissance du compresseur, on commande la vitesse de rotation du compresseur (9, 43).

4. Procédé selon la revendication 1, caractérisée en ce que, pour contrôler la puissance du compresseur, on commande le degré de remplissage du compresseur (9, 43) par un étranglement d'aspiration variable.

5. Procédé selon une des revendications 1 à 4, caractérisé en ce que, pour contrôler la puissance du condenseur, on règle le débit de l'air traversant le condenseur (16, 19, 19') en commandant la vitesse de rotation du ventilateur (29, 29', 36) et/ou au moyen d'une persienne manoeuvrée par un servomoteur.

6. Procédé selon une des revendications 1 à 5, caractérisé en ce que, pour contrôler la puissance de l'évaporateur, on règle le débit de l'air traversant l'évaporateur (21, 21', 22) en régulant la vitesse de rotation de la soufflante (31, 31', 58).

7. Procédé selon une des revendications 1 à 5, caractérisé en ce que, pour contrôler la puissance de l'évaporateur, on règle le débit du frigorigène à l'aide d'un dispositif d'étranglement ou d'une soupape d'injection (23, 23', 24).

8. Procédé selon la revendication 3, caractérisé en ce que la vitesse de rotation du compresseur peut être commandée au moyen d'une transmission à courroie, d'un train planétaire, d'un moteur électrique dont la vitesse est réglée ou d'un entraînement hydrostatique réglable.

9. Procédé selon la revendication 5, caractérisé en ce que la vitesse de rotation du ventilateur est réglable au moyen d'un coupleur à liquide visqueux (28, 28') à commande électrique, d'un embrayage électromagnétique, d'un moteur électrique (35, 67) à vitesse réglable ou d'un entraînement hydrostatique.

10. Procédé selon la revendication 9, caractérisé en ce que la caractéristique pour réguler la vitesse de rotation du ventilateur est discontinue (par tout ou rien), à plusieurs paliers ou continue.

11. Procédé selon la revendication 6 ou 9, caractérisé en ce que la caractéristique pour réguler l'entraînement du ventilateur (28, 28', 35, 67) ou l'entraînement de la soufflante (30, 30', 57) est quasi-continue, avec utilisation d'une fréquence fondamentale du signal inférieure à 1.000 Hz, de préférence inférieure à 100 Hz.

12. Procédé selon la revendication 1, caractérisé en ce que le ventilateur (29, 29', 36) est entraîné par voie hydrostatique et, pour la commande de la vitesse de rotation du ventilateur, le circuit de commande électronique (1) envoie des signaux de sortie adéquats, éventuellement à travers un amplificateur de puissance (65), à un organe de positionnement électromécanique qui agit sur une soupape de réglage du système d'entraînement hydrostatique.

13. Procédé selon la revendication 7, caractérisé en ce que le dispositif d'étranglement ou la soupape d'injection (23, 23', 24) est à pilotage électrique, avec une régulation continue ou quasi-continue et, au cas où la régulation est quasi-continue, le pilotage du dispositif d'étranglement s'effectue par des impulsions modulées en largeur d'impulsion.

14. Procédé selon une des revendications 1 à 13, caractérisé en ce que la détermination du besoin en puissance frigorifique s'effectue en fonction des signaux d'au moins un capteur (2) pour la température intérieure, un capteur (3) pour la température extérieure, un organe (4) pour le réglage d'une valeur de consigne, un capteur d'humidité (6) et un capteur (5) pour le rayonnement solaire.

15. Procédé selon une des revendications 1 à 14, caractérisé en ce que, en tant que valeur représentative pour la formation de glace dans l'évaporateur, on mesure la pression d'aspiration au moyen d'un capteur de pression (45, 45') et on convertit le signal fourni par ce capteur en une grandeur électrique au moyen d'un transducteur (27).

16. Procédé selon une des revendications 1 à 14, caractérisé en ce que, en tant que valeur représentative pour la formation de glace dans l'évaporateur, on mesure la température ou la pression du frigorigène et/ou la température superficielle dans le réseau de l'évaporateur et/ou la température de sortie d'air en aval de l'évaporateur (21, 21', 22) et on applique au circuit de commande électronique (1) un signal électrique correspondant à la valeur mesurée.

17. Procédé selon une des revendications 1 à 16, caractérisé en ce que l'on mesure la vitesse de rotation du moteur pour la propulsion du véhicule au moyen d'un dispositif de captage (7) et on l'applique au circuit de commande électronique (1), que le circuit de commande électronique (1) constate le dépassement d'une vitesse de rotation préfixée et que ce circuit calcule en outre l'accélération à partir de deux valeurs qui se suivent dans le temps pour la vitesse de rotation du moteur.

18. Procédé selon une des revendications précédentes, caractérisé en ce qu'un capteur (37) détecte la position et/ou le mouvement du pédale d'accélérateur (38) et applique un signal correspondant au circuit de commande électronique (1).

19. Procédé selon une des revendications 14 à 18, caractérisé en ce que, pour calculer les signaux de sortie servant à piloter ou à alimenter les moyens de positionnement ou les éléments d'entraînement (13, 23, 23', 24, 28, 28', 30, 30', 35, 57, 67), le circuit de commande électronique fait en outre entrer en ligne de compte les valeurs de la température du fluide de refroidissement du moteur et/ou de la vitesse de rotation du compresseur et/ou de la vitesse de rotation du ventilateur (29, 29', 36) coordonné au condenseur (16, 19, 19') et/ou de la soufflante d'évaporateur (31, 31', 58).

20. Procédé selon une des revendications 14 à 18, caractérisé en ce que, pour calculer les signaux de sortie servant à piloter ou à alimenter les moyens de positionnement ou les éléments d'entraînement ( 10, 11, 13, 23, 23', 24, 28, 30, 30', 35, 57, 67), le circuit de commande électronique (1) fait en outre entrer en ligne de compte la valeur de la température de l'huile du moteur et/ou de l'huile de la boîte de vitesses, de la température de l'air de charge et de la pression dynamique, cette dernière étant tirée de la vitesse du véhicule.

21. Procédé selon la revendication 18, caractérisé en ce que le circuit de commande électronique (1) détermine les phases de fonctionnement du véhicule dans lesquelles la force vive du véhicule fait tourner le moteur, à partir du signal du capteur (37) détectant la position et/ou le mouvement de l'accélérateur (38) et du signal d'un capteur (7) pour la vitesse de rotation du moteur, et que l'installation de climatisation est mise en service à toute sa puissance dans ces phases de fonctionnement.

22. Installation de climatisation de véhicule automobile pour la mise en oeuvre du procédé selon la revendication 1, possédant un cycle frigorifique qui comprend au moins un compresseur de frigorigène dont la puissance est réglée, un condenseur, un évaporateur et un dispositif d'étranglement pour le frigorigène, qui est installé en amont de l'évaporateur, avec coordination au condenseur d'un ventilateur pour diriger de l'air de refroidissement sur celui-ci et avec prévision d'une soufflante pour produire un courant d'air à travers l'évaporateur, caractérisée en ce que des moyens de captage (8, 14, 44, 44', 45, 45') sont prévus pour détecter la puissance du compresseur, la puissance du condenseur et la puissance de l'évaporateur et ces moyens de captage (8, 8', 14, 44, 44', 45, 45') sont reliés à un circuit de commande électronique (1) commun, éventuellement avec interposition de convertisseurs de mesure (20, 26, 27), le circuit de commande électronique (1) comprenant au moins un microprocesseur, et que, côté sortie, le circuit de commande électronique (1) est relié à des moyens de positionnement (10, 11, 13, 23, 23', 28, 28', 30, 30', 35, 57) à pilotage électrique pour contrôler la puissance du compresseur, la puissance du condenseur et/ou la puissance de l'évaporateur.

23. Installation de climatisation de véhicule automobile selon la revendication 22, caractérisée en ce qu'elle comprend les moyens de captage suivants:
   - un capteur de vitesse de rotation (14) pour la vitesse de rotation du compresseur (43),
   - un capteur (54) pour la température du gaz chaud,
   - un capteur de température (53) qui détecte la température d'injection du frigorigène dans l'évaporateur (21, 22),
   - un capteur de température (52) qui détecte la température du frigorigène sur le côté aspiration de l'évaporateur (21, 22) et
- un capteur de vitesse de rotation (32) pour le ventilateur (36) du condenseur.

24. Installation de climatisation de véhicule automobile selon la revendication 22 ou 23, caractérisée en ce qu'elle comprend deux évaporateurs (21, 22) montés fonctionnellement en parallèle et présentant chacun une soupape d'injection (23, 24), la conduite de frigorigène en amont d'une des soupapes d'injection (24) contenant un robinet d'arrêt (25) à commande électrique, qui est relié aux bornes de sortie du circuit de commande électronique (1).

25. Installation de climatisation de véhicule automobile selon la revendication 24, caractérisée en ce que la branche de frigorigène montée en parallèle (évaporateur 21', 22) peut être coupée au moyen de la soupape d'injection (23', 24) par pilotage à partir du circuit de commande électronique (1).

26. Installation de climatisation de véhicule automobile selon la revendication 24 ou 25, caractérisée en ce qu'un second condenseur (19') est prévu en parallèle avec le premier condenseur (19) et qu'un robinet d'arrêt (39) est monté en série avec ce second condenseur (19') parallèle.

27. Installation de climatisation de véhicule automobile selon une des revendications 22 à 25, caractérisée en ce qu'un second condenseur (16) est monté en série avec le condenseur (51) et q'une conduite de bipass (18) est prévue en dérivation avec le second condenseur (16) et contient un robinet d'arrêt (17).

28. Installation de climatisation de véhicule automobile selon une des revendications 24 à 27, caractérisée en ce qu'une soufflante supplémentaire (31') est coordonnée au second évaporateur (21') et/ou un ventilateur supplémentaire (29') est coordonné au second condenseur (19').

29. Installation de climatisation de véhicule automobile selon la revendication 23, caractérisée en ce qu'elle comprend les moyens de captage suivants:
- au moins un capteur (2) pour la température de l'intérieur du véhicule,
- un capteur (3) pour la température extérieure,
- un organe (4) pour le réglage d'une valeur de consigne,
- un capteur (5) pour le rayonnement solaire et
- un capteur d'humidité (6).

30. Installation de climatisation de véhicule automobile selon la revendication 23 ou 29, caractérisée en ce qu'elle comprend les moyens de captage suivants:
- un capteur (7) pour la vitesse de rotation du moteur de propulsion du véhicule,
- un capteur de température (33) pour l'eau de refroidissement de ce moteur,
- un capteur de température (34) pour l'huile du moteur et
- un capteur de température pour l'huile de la boîte de vitesses.

31. Installation de climatisation de véhicule automobile selon une des revendications 22 à 30, caractérisée en ce qu'elle comporte un capteur (37) couplé à une pédale d'accélérateur (38) et conçu de manière qu'il détecte le déplacement de l'accélérateur (38) en tant que grandeur d'entrée et que sa sortie délivre un signal électrique.

32. Installation de climatisation de véhicule automobile selon une des revendications 22 à 31, caractérisée en ce qu'elle possède un groupe compresseur (42) commandé qui comprend un compresseur (43), un clapet d'aspiration (10), un clapet haute pression (11), un piston de commande (12) pour contrôler le volume géométrique déplacé ou cylindrée du compresseur (43) et un embrayage (13) pour l'entraînement du compresseur.

Fig. 1

Fig. 4

Fig. 2

Fig. 3